# EUROPEAN PATENT SPECIFICATION

(11) **EP 1 497 827 B1**
(45) Date of publication and mention of the grant of the patent: **16.07.2008**
(21) Application number: 03719829.8
(22) Date of filing: 17.04.2003
(51) Int. Cl.: G11B 19/02, H04N 5/765

(54) **VIDEO PROCESSING APPARATUS WHICH CAN RESPOND TO NON-NATIVE REMOTE COMMANDS AND METHOD OF OPERATION THEREOF**
VIDEOBEARBEITUNGSGERÄT, DAS AUF NICHT-ARTEIGENE KOMMANDOS ANSPRECHEN KANN UND ARBEITSVERFAHREN DAZU
APPAREIL DE TRAITEMENT VIDEO CAPABLE DE REAGIR A DES TELECOMMANDES ETRANGERES ET MODE DE MISE EN OEUVRE

(30) Priority: 22.04.2002 US 374539 P
(43) Date of publication of application: 19.01.2005
(73) Proprietor: Thomson Licensing, 92100 Boulogne-Billancourt (FR)
(72) Inventor: LIEBHOLD, Valerie, Sacrez, Carmel, IN 46032 (US); MEARS, Mark, Gilmore, Zionsville, IN 46077-8258 (US)
(74) Representative: Arnold, Klaus-Peter
(86) International application number: PCT/US2003/011991
(87) International publication number: WO 2003/090224

(56) References cited:
- EP-A- 0 930 781
- WO-A-02/19691
- US-A1- 2002 035 404

## Description

### Technical Field of the Invention

This invention generally relates to the field of devices which function in response to user commands.

### Background Art

Devices which function in response to code commands are very well known, for example televisions, VCRs, CD players, DVD recorders, personal video recorders, cable boxes, to name but a few types. In most types of devices, the code commands are organized so as to have a prefix which indicates the type of device being controlled, i.e., VCR or DVD or STB, for example. Systems that receive broadcast signals and generate a display signal for a television set are known as set-top boxes ("STB"), whether they are actually on top of a television set or any other location outside or within the television set itself. Set-top boxes are currently available for receiving digital satellite television broadcast, cable television broadcast, community antenna service, dial up, cable, or DSL Internet service, or combinations thereof.

An STB is any electronic device designed to produce output on a conventional television set, having one or more inputs connected to a communications channel such as telephone, ISDN, optical fiber, or cable. STB's usually allow the user to interact with the programs shown on the television in some way. Many STB's offer on-screen program guides, known as electronic program guides ("EPG"), that allow the user to perform many program related functions, such as program searching, parental controls, and program recording. Control of external devices such as VCR's, DVD players, personal video recorders and television sets, for example, is also possible. Typically, a user interacts with the STB via an infrared ("IR") remote control or manually entering commands via buttons on the STB.

Many STB's having EPG's allow a user to select a show from the STB's EPG and record it to a VCR by sending a one-touch record command to the STB. In response to receiving the one-touch record command, the STB sends a VCR IR code record signal via an IR blaster to the VCR. The VCR IR code signal is received and executed by the VCR. At the end of the program, the STB usually sends a stop recording VCR IR code command to the VCR via the IR blaster. The VCR then responds accordingly.

When an owner of such an STB decides to upgrade from an analog VCR to a digital recorder, such as a personal video recorder ("PVR") or a digital versatile disc player ("DVD") player, such an STB is not capable of communicating with the digital recorder. If available, an upgraded owner must use a satellite and cable guide that is built into the digital recorder to perform program recordings. Some digital recorders may not offer a guide with satellite or other EPG information. The user will not be able to use the EPG of the STB to send record commands to the digital recorder because the digital recorder answers only to IR codes with a digital recorder identity. The identity of a code command is delineated by that code's prefix/preamble. STB's that were designed at a time when digital recorders were not available will not be able to communicate with the digital recorder because they can only produce code commands with a VCR identity/preamble.

Thus, a need exists for a personal video recorder that can understand various IR codes types, such as VCR IR codes and digital recorder IR codes. A need also exists for an apparatus that can receive a first type of IR code from an STB, convert the first type of IR code to a second type of IR code, and send the second type of IR code to a recording device that can execute the second type of IR code.

In EP-A-0 930 781) a set-top box with a controller is described which receives a selection of user commands by means of an on-screen control panel for controlling a digital video recorder (DVCR), converts that selection into a DVCR command sequence, and transmits that command sequence via an IEEE 1394 bus to the DVCR.

### Disclosure of the invention

These needs, and others which will become apparent from the following disclosure and drawings, are addressed by the present invention which in one aspect is a video processing apparatus such as a digital video recorder apparatus controllable by its own user commands (the first type of user commands) but also by user commands (the second type of user commands) of a different type of video processing apparatus such as a VCR. The video processing apparatus includes a receiver (the receiving means) for receiving both types of user commands, and a processing unit (the executing means) for executing one of a plurality of functions provided by the video processing apparatus upon receiving a corresponding user command of the second type.

The execution means can be a command interpreter for mapping the second type of user commands into corresponding functions provided by the video processing apparatus. Alternatively, the execution means can be a properly programmed processor. It is preferred that the second type of user commands is VCR code commands while the video processing apparatus is a digital recorder.

When the video processing apparatus is a digital recorder, the video recorder of the present invention can be used to execute a number of video recorder functions, such as turn on digital recorder, start recording, start playing, stop recording and playing, and turn off digital recorder. In this embodiment, the second type of user commands will be VCR turn on unit, VCR record, VCR play, VCR stop, and VCR turn off unit. The video recorder can be a digital recorder selected from the group consisting of a personal video recorder or a DVD player while the different type of video processing apparatus can be a VCR.

In another aspect, the invention is a method of controlling a recorder apparatus comprising: receiving a second type of recorder command; mapping the second type of recorder command into a corresponding first type of recorder function; and executing the corresponding first type of recorder function. It is preferred that the second type of recorder command is a VCR code command and the first type of recorder function is a digital recorder function.

In yet another aspect, the invention is an interpretation apparatus for receiving a second type of video recorder command and outputting a corresponding first type of video recorder command comprising: a receiver adapted to receive the second type of video recorder command; means to map the second type of video recorder command into a corresponding first type of video recorder command; and means to output the corresponding first type of video recorder command. The interpretation apparatus is a stand alone device that is operably positioned between the STB and the video recorder apparatus. As with the other embodiments of the invention, it is preferred that the second type of video recorder command be VCR code command and the first type of video recorder command be a digital recorder code command, such as DVD player or personal video recorder command. The receiver can comprise an IR sensor, and the output means can be an IR blaster, a serial pin output, or a microjack. The mapping means can be a programmed processor or a command interpreter.

In still another aspect, the invention is a device which functions in response to code commands comprising: means to execute a function in response to a code command having a format for the device; and means to execute the function in response to a code command having a format for a different device. In this aspect, the code command having a format for the device will preferably have a first preamble and the code command having a format the different device will preferably have a second preamble. The first preamble can be a VCR preamble and the second preamble can be a digital recorder preamble.

The recorder apparatus, the interpretation apparatus, and the device of the present invention are all adapted to "learn" various commands, such as record, play, etc., from a VCR and also "learn" various corresponding commands of a digital recorder. As used herein, "learn" means that the apparatus will capture the IR code and analyze its important components, e.g. carrier frequency, length, etc., so that it can recognize in the future when it receives a particular command from a particular device. When it does recognize the command, it emits the equivalent digital recorder command. Thus, when the apparatus receives a VCR command, it can emit the corresponding digital recorder command.

### Brief Description of Drawings

FIG. 1 is a block diagram of a recorder according to the invention.

FIG. 2 is a block diagram of an apparatus according to the invention operably connected to a recorder.

FIG. 3 a flowchart showing an embodiment of a method according to the invention.

### Modes for Carrying Out the Invention

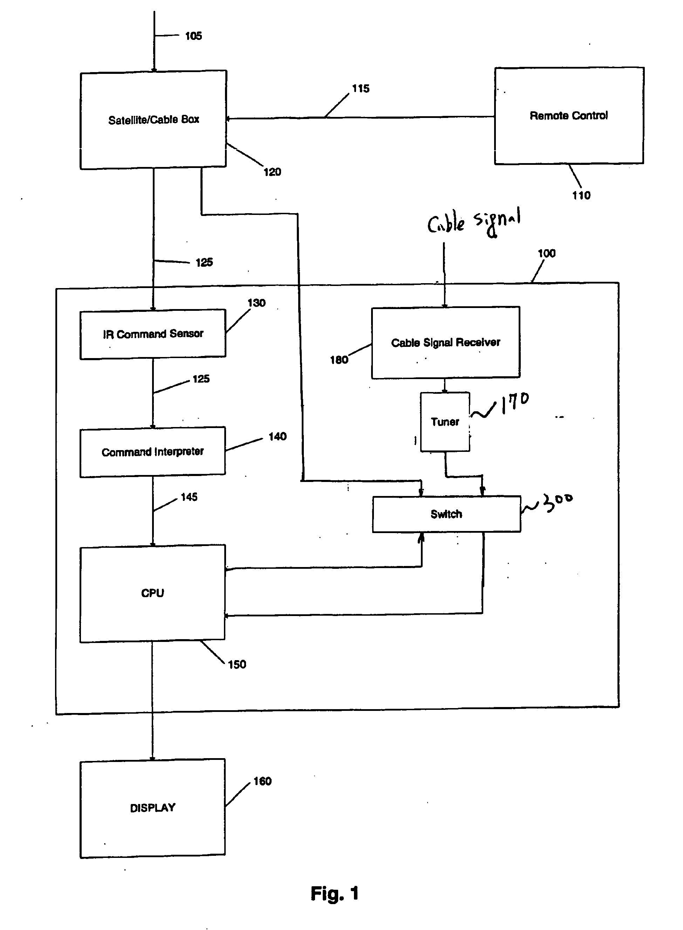

Referring to FIG 1, digital video recorder 100 is illustrated according to the present invention. Digital video recorder 100 comprises IR command sensor 130, command interpreter 140, computer processing unit ("CPU") 150, tuner 170, switch 300, and cable signal receiver 180. All of the components of digital video recorder 100 are linked via a bus and controlled by CPU 150 according to standards known in the art. Digital video recorder 100 is operably coupled to display 160 and satellite/cable box ("SCB") 120. The functions of digital video recorder **100** operate according to digital recorder code commands. Digital recorder code commands can be a DVD code commands or any other type of digital code commands. Display **160** can be any type of display module capable of producing images, such as a television or computer monitor. The digital video recorder **100** receives video signals from two sources: one directly from a cable network and the other from SCB **120.** A user should instruct the digital video recorder **100** which one of the two sources for receiving video signals. When the source is directly from a cable network, a user should also instruct the digital video recorder **100** the channel information, so that the digital video recorder **100** can tune to that channel. Specifically, the cable signal receiver **180** receives cable signals directly from a cable network and the tuner **170** tunes to the channel as specified by the user to receive video signals. The video signals are then fed to the switch **300,** which selects the video signals from the tuner **170** as its output, as instructed by the CPU **150** using methods known in the art. When a user instructs the digital video recorder **100** to receive video signals from the SCB **120,** the video signals are fed to the switch **300** directly, and the CPU **150** directs the switch 300 to select the video signals from the SCB **120** as its output.

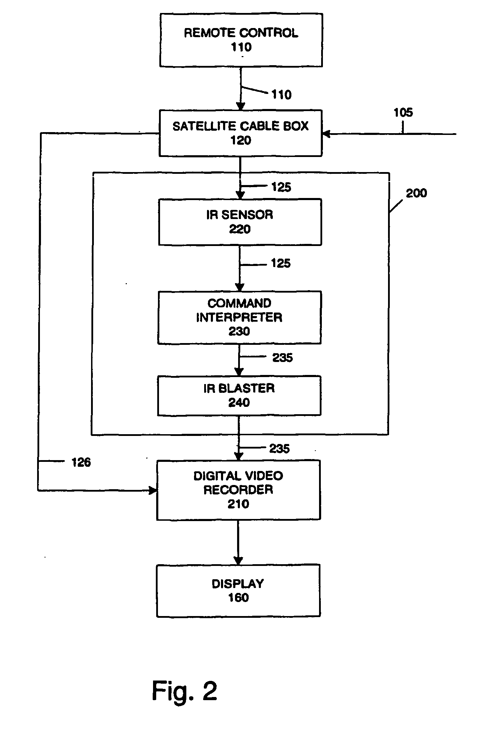

SCB **120** is designed to receive both user input commands **115** from remote control **110** and a cable signal **105** from a signal source. Remote control **110** is programmed to communicate with SCB **120.** Alternatively, a universal remote control can be used that will send signals directly to digital video recorder **100** or code command converter **200** (FIG. 2). A user controls satellite/cable box "(SCB") **120** by inputting choices into remote control **110** by pressing keys associated with the desired commands. Remote control **110** responds by sending an associated user input command to SCB **120** via an IR signal, an electrical connection, electromagnetic frequencies, or any other means known in the art. Remote control **110** comprises keys for controlling functions of SCB **120.** SCB **120** is designed to only receive SCB-related user input commands **115** and issue VCR code commands 125. The exact function of VCR code command **125** will be dictated by the identity of the key on remote control **110** that is pressed by the user. The process of SCB **120** in converting SCB related user input command **115** into a corresponding VCR code command **125** is controlled by a properly programmed processor (not illustrated) within the SCB **120.** If a universal or VCR remote control is used, VCR code commands **125** can be sent directly from the remote control to IR command sensor **130.**

SCB **120** also receives cable signal **105.** SCB **120** tunes to the channel specified in the user command transmitted from the remote control 110, so that the video signals from that channel are extracted. As described above, the extracted video signals are directly fed to the switch **300** of the digital recorder **100** via any known method or connection capable of transmitting data, such as IR signals or electromagnetic frequencies.

SCB **120** transmits VCR code command **125** to IR command sensor **130** of digital video recorder **100.** This is preferably done via a properly linked IR blaster (not illustrated) within SCB **120.** Alternatively, an electrical, electromagnetic, or other connection can be used. IR command sensor **130** receives VCR code command **125** in IR form, converts it to an electrical signal, and transmits it to command interpreter **140.** However, the signal remains in VCR code format. Command interpreter **140** receives VCR code command **125** and converts it into corresponding digital recorder code command **145.** Command interpreter **140** performs this conversion process by mapping an incoming VCR code command into a corresponding digital recorder code command. This mapping procedure is achieved by properly programming CPU **150** and/or software in a memory device (not illustrated) that will be executed by CPU **150.** Once command interpreter **140** converts the incoming VCR code command **125** into digital recorder code command **145,** digital recorder code command **145** transmits digital recorder code command **145** to CPU **150** for execution. CPU **150** then executes digital recorder code command **145** by sending proper commands to the components of digital video recorder **100** such as switch **300** and/or tuner **170** to perform digital recorder functions. For example, if digital recorder code command **145** is a one-touch record command for a specific channel, CPU **150** will send the appropriate signals to tuner **170** and the recording mechanism (not illustrated) of digital video recorder **100.**

Through the use of proper programming, command interpreter **140** and CPU **150** can translate any VCR code command to any type of corresponding digital recorder code command. The present invention is not limited to the use of a command interpreter. Alternatively, CPU **150** can be programmed to perform all mapping function through proper programming. Additionally, the present invention is not limited to being embodied as a digital video recorder but can take the form of an independent interpretation apparatus operably coupled between the SCB and digital recorder.

Referring to FIG. 2, code command converter **200** is illustrated as being coupled to SCB **120** and digital video recorder **210.** The functions of digital video recorder **210** operate according to digital recorder code commands. SCB **120** operates as described in relation to FIG. 1 and is designed to output VCR code commands only. Code command converter **200** comprises IR sensor **220,** command interpreter **230,** and IR blaster **240.** All of the components of code command converter **200** are linked via a bus and controlled by a CPU (not illustrated) according to standards known in the art. IR sensor **220** receives VCR code command **125** from SCB **120** and transmits it to command interpreter **230** as described above. Command interpreter **230** maps out and converts the incoming VCR code command **125** into corresponding outgoing digital recorder code command **235.** Corresponding digital recorder code command **235** is then transmitted to IR blaster **240.** IR blaster **240** then transmits corresponding digital recorder code command **235** to digital recorder **210** for execution thereby.

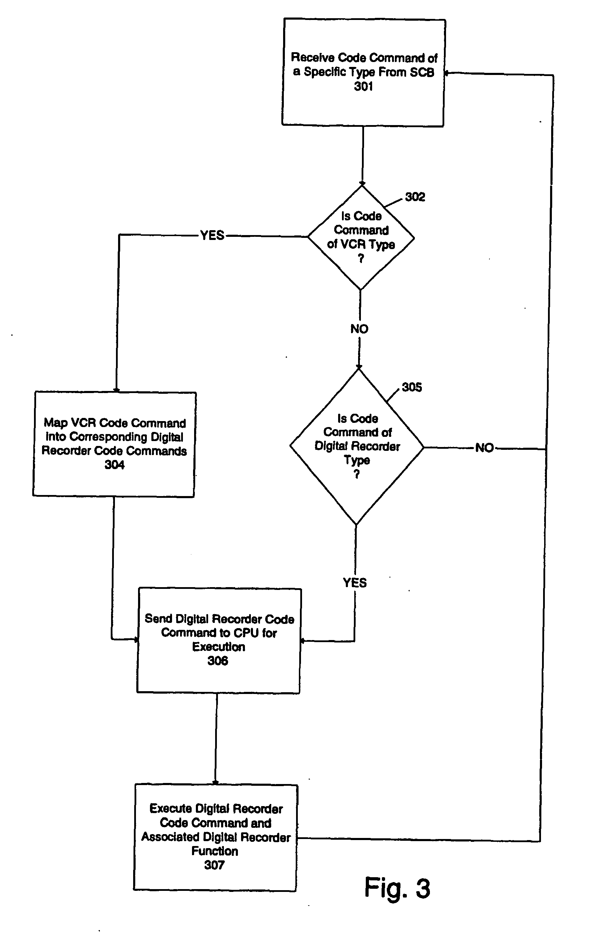

The present invention can be used to convert/translate sets of commands simultaneously. Moreover, the apparatus of the present invention are capable of receiving both VCR code commands and digital recorder code commands. In this embodiment, the incoming code command is first evaluated to determine its type, VCR or digital recorder. Then, depending on the results of the evaluation, the decision is made whether mapping is necessary. An embodiment of this method is illustrated in FIG. 3 wherein the system receives 301 a code command of a specific type from an SCB and if 302 the code command is of the VCR type, it maps 304 the VCR code command into a corresponding Digital Recorder Code command and sends 306 the Digital Recorder Code Command to the CPU controller for execution 307 along with associated Digital Recorder Function, otherwise, if the command is not of the VCR type, then the system determines 305 if the command is of Digital Recorder type. If so, the Digital Recorder Code command is sent 306 to the CPU for execution, otherwise if not the system waits for receipt 301 of a command of a specific type from the SCB.

While the invention and preferred embodiments have been described and illustrated in sufficient detail that those skilled in this art may readily make and use the invention, various alternatives, modifications and improvements should become readily apparent to this skilled in this art without departing from the spirit and scope of the invention. For example, a DVD player according to the principles of the invention can be controlled by a VCR remote control at least for the play, the stop, the rewind, and the forward functions.

## Claims

1. A video processing apparatus (200), (210) controllable by a first type of user commands for performing video processing functions, the video processing apparatus comprising:
means (220) for receiving the first type and a second type of user commands, wherein the second type is used to control a different type of video processing device; and
means (230), (240) for executing one of the video processing functions upon receiving a corresponding user command of the second type without transmitting a corresponding command to the different type of video processing device.

2. The apparatus of claim 1, wherein the executing means comprises a command interpreter (230) for mapping the second type of user commands into corresponding one of the video processing functions.

3. The apparatus of claim 1, wherein the second type of user commands are VCR code commands.

4. The apparatus of claim 3, wherein the video processing apparatus is a digital recorder (210) and the video processing functions are digital recorder functions.

5. The apparatus of claim 4, wherein the digital recorder functions comprise digital recorder turn on, digital recorder start recording, digital recorder stop recording, and digital recorder turn off, and the second type of recorder commands are VCR turn on unit, VCR record, VCR stop, and VCR turn off unit.

6. The apparatus of claim 1, wherein the video processing apparatus is a digital recorder selected from the group consisting of a personal video recorder and a DVD player.

7. The apparatus of claim 1, wherein the different type of video processing apparatus is a VCR.

8. A method of controlling a recorder comprising:
receiving (301) a second type of recorder command;
mapping (304) the second type of recorder command into a corresponding first type of recorder function; and
executing (306), (307) the corresponding first type of recorder function without transmitting said first and second types of recorder command to a different recorder.

9. The method of claim 8, wherein the second type of recorder command is a VCR code command.

10. The method of claim 8, wherein the first type of recorder function is a digital recorder function.

11. A device (200) responding to code commands comprising:
means to execute a function in response to a code command having a format for the device; and
means to execute the function in response to a code command having a format for a different device without transmitting said code command having a format of said different device to said different device.

12. The device of claim 11 wherein the code command having a format for the device has a first preamble and the code command having a format for the different device has a second preamble.

13. The device of claim 12 wherein the first preamble is a VCR preamble and the second preamble is a digital recorder preamble.

## Patentansprüche

1. Videoverarbeitungsgerät (200), (210), durch eine erste Art von Benutzerbefehlen zum Durchführen von Videoverarbeitungsfunktionen steuerbar, wobei das Videoverarbeitungsgerät umfasst:
Mittel (220) zum Empfangen der ersten Art und einer zweiten Art von Benutzerbefehlen, wobei die zweite Art verwendet wird, um eine unterschiedliche Art von Videoverarbeitungseinrichtung zu steuern; und
Mittel (230), (240) zum Ausführen von einer der Videoverarbeitungsfunktionen nach dem Empfangen eines entsprechenden Benutzerbefehls der zweiten Art, ohne einen entsprechenden Befehl an die unterschiedliche Art von Videoverarbeitungseinrichtung zu übertragen.

2. Gerät nach Anspruch 1, wobei die Ausführungsmittel ein Befehlsinterpretierprogramm (230) zum Abbilden der zweiten Art von Benutzerbefehlen als eine entsprechende der Videoverarbeitungsfunktionen umfassen.

3. Gerät nach Anspruch 1, wobei die zweite Art von Benutzerbefehlen aus Videorecorder-Codebefehlen bestehen.

4. Gerät nach Anspruch 3, wobei das Videoverarbeitungsgerät aus einem Digitalrecorder (210) besteht und die Videoverarbeitungsfunktionen aus Digitalrecorderfunktionen bestehen.

5. Gerät nach Anspruch 4, wobei die Digitalrecorderfunktionen umfassen: Digitalrecorder Einschalten, Digitalrecorder Start Aufzeichnen, Digitalrecorder Stopp Aufzeichnen und Digitalrecorder Ausschalten, und die zweite Art von Recorderbefehlen bestehen aus: Videorecorder Einheit Einschalten, Videorecorder Aufzeichnung, Videorecorder Stopp und Videorecorder Einheit Ausschalten.

6. Gerät nach Anspruch 1, wobei das Videoverarbeitungsgerät aus einem Digitalrecorder besteht, der aus der Gruppe auswählt ist, die aus einem persönlichen Videorecorder und einem DVD-Abspielgerät besteht.

7. Gerät nach Anspruch 1, wobei die unterschiedliche Art von Videoverarbeitungsgerät aus einem Videorecorder besteht.

8. Verfahren zum Steuern eines Recorders, umfassend:
Empfangen (301) einer zweiten Art von Recorderbefehl;
Abbilden (304) der zweiten Art von Recorderbefehl als eine entsprechende erste Art von Recorderfunktion; und
Ausführen (306), (307) der entsprechenden ersten Art von Recorderfunktion, ohne die erste und zweite Art von Recorderbefehl an einen unterschiedlichen Recorder zu übertragen.

9. Verfahren nach Anspruch 8, wobei die zweite Art von Recorderbefehl aus einem Videorecorder-Codebefehl besteht.

10. Verfahren nach Anspruch 8, wobei die erste Art von Recorderfunktion aus einer Digitalrecorderfunktion besteht.

11. Einrichtung (200), die auf Codebefehle anspricht, umfassend:
Mittel, zum Ausführen einer Funktion als Reaktion auf einen Codebefehl, der ein Format für die Einrichtung aufweist; und
Mittel zum Ausführen der Funktion als Reaktion auf einen Codebefehl, der ein Format für eine unterschiedliche Einrichtung aufweist, ohne den Codebefehl, der ein Format der unterschiedlichen Einrichtung aufweist, an die unterschiedliche Einrichtung zu übertragen.

12. Einrichtung nach Anspruch 11, wobei der Codebefehl, der ein Format für die Einrichtung aufweist, eine erste Präambel aufweist, und der Codebefehl, der ein Format der unterschiedlichen Einrichtung aufweist, eine zweite Präambel aufweist.

13. Einrichtung nach Anspruch 12, wobei die erste Präambel aus einer Videorecorder-Präambel besteht und die zweite Präambel aus einer Digitalrecorder-Präambel besteht.

## Revendications

1. Appareil de traitement vidéo (200), (210), pouvant être commandé par des commandes d'utilisateur d'un premier type pour réaliser des fonctions de traitement vidéo, l'appareil de traitement vidéo comportant :
un moyen (220) de réception de commandes d'utilisateur du premier type et d'un deuxième type, dans lequel le deuxième type est utilisé pour commander un dispositif de traitement vidéo d'un type différent ; et
un moyen (230), (240) d'exécution d'une des fonctions de traitement vidéo quand il reçoit une commande d'utilisateur correspondante du deuxième type sans transmettre une commande correspondante au dispositif de traitement vidéo du type différent.

2. Appareil selon la revendication 1, dans lequel le moyen d'exécution comporte un interpréteur de commande (230) pour faire correspondre les commandes d'utilisateur du deuxième type avec une des fonctions correspondantes de traitement vidéo.

3. Appareil selon la revendication 1, dans lequel les commandes d'utilisateur du deuxième type sont des commandes codées de magnétoscope (VCR- Video Cassette Recorder)

4. Appareil selon la revendication 3, dans lequel l'appareil de traitement vidéo est un enregistreur numérique (210) et les fonctions de traitement vidéo sont celles d'un enregistreur numérique.

5. Appareil selon la revendication 4, dans lequel parmi les fonctions d'enregistreur numérique figurent : la mise sous tension de l'enregistreur numérique, la mise en route de l'enregistrement numérique, l'arrêt de l'enregistrement numérique, et la mise hors tension de l'enregistreur numérique ; et parmi les commandes de l'enregistreur du deuxième type figurent l'unité de mise sous tension du magnétoscope , l'enregistrement par le magnétoscope, l'arrêt du magnétoscope et l'unité de mise hors tension du magnétoscope.

6. Appareil selon la revendication 1, dans lequel l'appareil de traitement vidéo est un enregistreur numérique choisi par le groupe constitué par les enregistreurs vidéo et les lecteurs de disques DVD personnels.

7. Appareil selon la revendication 1, dans lequel l'appareil de traitement vidéo de type différent est un magnétoscope

8. Procédé de commande d'un enregistreur comportant les étapes suivantes :
réception (301) d'une commande d'enregistreur d'un deuxième type ;
mise correspondance (304) de la commande d'enregistreur de deuxième type avec une fonction d'enregistreur du premier type correspondante ; et
exécution (306), (307) de la commande d'enregistreur du premier type correspondante sans transmettre de commande d'enregistreur desdits premier et deuxième types à un enregistreur différent.

9. Procédé selon la revendication 8, dans lequel la commande d'enregistreur du deuxième type est une commande codée de magnétoscope.

10. Procédé selon la revendication 8, dans lequel la fonction d'enregistreur du premier type est une fonction d'enregistreur numérique.

11. Dispositif (200) réagissant aux commandes codées comportant :
un moyen d'exécution d'une fonction en réaction à une commande codée qui a un format adapté au dispositif ; et
un moyen d'exécution d'une fonction en réaction à une commande codée qui a un format adapté à un dispositif différent sans transmettre, audit dispositif différent, ladite commande codée qui a un format adapté audit dispositif différent.

12. Dispositif selon la revendication 11, dans lequel la commande codée qui a un format adapté au dispositif comporte un premier préambule et la commande codée qui a un format adapté au dispositif différent comporte un deuxième préambule.

13. Dispositif selon la revendication 12, dans lequel le premier préambule est un préambule de magnétoscope et le deuxième préambule est un préambule d'enregistreur numérique.
